# EUROPÄISCHE PATENTSCHRIFT

(11) **EP 0 906 201 B1**
(45) Veröffentlichungstag und Bekanntmachung des Hinweises auf die Patenterteilung: **19.12.2001**
(21) Anmeldenummer: 96925714.6
(22) Anmeldetag: 11.07.1996
(51) Int. Cl.: B60P 7/15

(54) **ZURREINRICHTUNG IN AUFBAUTENWÄNDEN VON LASTKRAFTWAGEN**
LASHING DEVICE INTEGRATED IN TRUCK SUPERSTRUCTURE WALLS
DISPOSITIF D'ARRIMAGE INTEGRE DANS LES PAROIS DE LA CARROSSERIE DE POIDS-LOURDS

(43) Veröffentlichungstag der Anmeldung: 07.04.1999
(73) Patentinhaber: Spier Verwaltungs GmbH & Co.KG, 32839 Steinheim (DE)
(72) Erfinder: SPIER, Willi, D-32839 Steinheim (DE); HAGEDORN, Herbert, D-32805 Horn-Bad Meinberg (DE)
(74) Vertreter: Hanewinkel, Lorenz, Dipl.-Phys.
(86) Internationale Anmeldenummer: EP9603030
(87) Internationale Veröffentlichungsnummer: WO9802332

(56) Entgegenhaltungen:
- EP-A- 0 258 193
- DE-A- 2 227 132
- DE-A- 2 637 499
- DE-A- 4 339 768
- DE-U- 7 126 630
- DE-U- 7 137 264
- DE-U- 9 206 036
- US-A- 4 332 515

## Beschreibung

Die Erfindung bezieht sich auf eine Zurreinrichtung in Aufbautenwänden von Lastkraftwagen gemäß dem Oberbegriff des Patentanspruches 1.

Eine derartige Zurreinrichtung aus einer Vielzahl an (Zurrmulden) Zurrtöpfen ist aus der DE 43 39 768 C 2 bekannt geworden.

Ausgehend von diesem Stand der Technik ist es Aufgabe der Erfindung, die Zurrmulde weiter zu entwickeln und in einfacher Weise sowohl für den Einsatz von Zurrgurten als auch von Absperrstangen auszubilden.

Diese Aufgabe wird erfindungsgemäß durch die kennzeichnenden Merkmale des Patentanspruches 1 gelöst.

Die Zurrmulden oder Zurrtöpfe gemäß der Erfindung sind in Kreis- oder Oval- oder Langlochform ausgebildet und mit im Topf liegenden, an der geöffneten Topfseite mittig verlaufenden Stegen ausgestattet, die komplementär zu einem endseitigen Kupplungsteil einer zwischen zwei sich gegenüberliegenden Zurrtöpfen einsetzbaren Absperrstange ausgebildet sind.

Aufgrund der Stegausbildung sind diese Zurrtöpfe sowchl für Zurrgurte als auch für Absperrstangen als Kombinationsmulden einzusetzen.

Durch die kegelstumpfförmige Ausführung der erfindungsgemäßen Zurrtöpfe werden die entsprechenden Voraussetzungen für eine einhändige, leichte Durchführung der Zurrgurte geschaffen. Da die Seitenwände des Topfes unter einem Winkel zum Topfboden stehen, stößt beim Durchfädeln des Gurtes das Gurtende nicht gegen die Topfwand, sondern gleitet durch die Schräge automatisch auf der anderen Seite wieder heraus. Gleichzeitig wird ein Ausfransen des Gurtendes auch bei längerem Gebrauch verhindert und somit die Lebensdauer der Gurte verlängert.

Die Stege sind dabei bei einer Ausführung als Breitstege mit einem unrunden Loch ausgebildet, in dem ein Kegelstumpfbolzen als Kupplungsteil der Absperrstange einsetzbar ist, wobei dieses Kupplungsteil unter Vorspannung einer Zugfeder steht, so daß der Kupplungsbolzen hinter dem Loch gehalten wird, und die beiden sich gegenüberliegenden Zurrtöpfe durch die Absperrstange gegen Ausbeulen der Aufbautenwände zusammengehalten werden.

Dieses unrunde Loch ermöglicht weiterhin ein leichteres Einsetzen der Kupplungsteile der Absperrstange, da eine gewisse Beweglichkeit in Höhenrichtung vorhanden ist.

Bei einer weiteren Ausführungsform sind die Stege des Zurrtopfes von Doppel-T-Stegen gebildet, über deren mittig liegenden schmaleren Steg eine unter Druckspannung stehende Kupplungsgabel der Absperrstange greift, so daß die Absperrstange durch die beiden federbelasteten Kupplungsgabeln sicher zwischen den beiden sich gegenüberliegenden Zurrtöpfen gehalten ist.

Bei einer dritten Ausführungsform läßt sich das Kupplungsteil der Absperrstange von einem Haken bilden, welches den Randbereich des Steges oder aber den Randbereich zwischen Stegrand und Lochrand übergreifen kann. Auch dieses hakenförmige Kupplungsteil steht unter der Einwirkung einer Zugfeder und hält die Aufbautenwände gegen Ausbeulen sicher zusammen.

Bei einer weiteren Ausführungsform ist der Zurrtopf mit einer Langlochform oder Ovalform ausgestattet und besitzt einen quer zur Längsrichtung verlaufenden Breitsteg, in dem ein in Längsrichtung der Langlochform verlaufendes Langloch für ein Kupplungsteil der Absperrstange ausgenommen worden ist.

Hierbei kann der Steg auch verhältnismäßig breit sein und gibt dem Zurrtopf eine erhöhte Stabilität.

Der Zurrtopf läßt sich durch seine kegelstumpfförmige Form in einfacher und kostengünstiger Weise aus Metall durch Tiefziehen herstellen und in diesen Zurrtopf werden die Stege der verschiedenen Art durch Schweißen festgelegt.

Die Kegelstumpfform des Zurrtopfes gibt demselben weiterhin eine größere Verbindungsfläche und Klebeverbindung zwischen Topf und Wand, so daß eine stabile Befestigung mit großer Belastbarkeit des Zurrtopfes in der Aufbautenwand geschaffen worden ist.

Auf den Zeichnungen sind Ausführungsbeispiele der Erfindung dargestellt, welche nachfolgend näher erläutert werden. Es zeigt:
- Fig. 1: eine Vorderansicht eines eine Kreisform zeigenden Zurrtopfes mit Breitsteg und ovalem Einsteckloch,
- Fig. 2: einen Querschnitt durch denselben in eine Aufbautenwand eingesetzten Zurrtopf,
- Fig. 3: einen Querschnitt durch denselben Zurrtopf mit eingesetzter mit einem Kupplungsbolzen in der Steg-Einsteckloch eingreifender Absperrstange,
- Fig. 4: eine Vorderansicht eines eine Kreisform zeigen Zurrtopfes mit Doppel-T-Steg,
- Fig. 5: einen Querschnitt durch denselben Zurrtopf,
- Fig. 6: einen Querschnitt durch denselben Zurrtopf mit eingesetzter, mit einer Kupplungsgabel den Steg übergreifender Absperrstange,
- Fig. 7: einen Querschnitt durch den Zurrtopf mit eingesetzter, mit einem Kupplungshaken den Steg übergreifender Absperrstange,
- Fig. 8: eine Vorderansicht eines langlochförmigen Zurrtopfes mit Breitsteg und Einsteck-Langloch.

Die Zurreinrichtung in Aufbautenwänden (1) von Lastkraftwagen, insbesondere in Plywoodplatten (Sperrholzplatten) weist eine Vielzahl an im Abstand nebeneinander in waagerechten Reihen angeordneter Zurrtöpfe (2/3) bzw. Zurrmulden auf.

Jeder Zurrtopf (2, 3) hat eine kegelstumpfförmige, sich zum Topfboden (2a, 3c) verjüngende Topfform und ist in entsprechenden Aussparungen (4) der Aufbautenwand (1) formschlüssig und mindestens nahezu zur Wandfläche (1a) von der Aufbauten-Innenseite her eingesetzt und durch Kleber (K) festgelegt.

Im Zurrtopf (2/3) liegt ein mittig verlaufender Steg (5/6/7) und an der offenen Topfseite ist ein außen umlaufender parallel zum Topfboden (2a, 3c) liegender Flansch (8) angeformt.

Der Steg (5/6/7) ist komplementär zu einem endseitigen Kupplungsteil (9/10/11) einer zwischen zwei sich gegenüberliegenden Zurrtöpfen (2/3) einsetzbaren Absperrstange (12) ausgebildet.

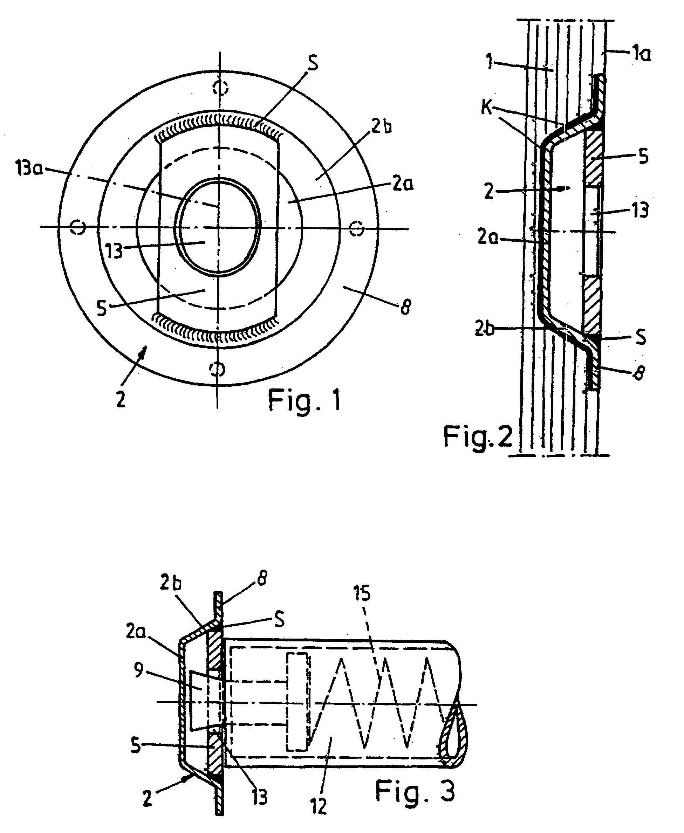

Gemäß der Ausführung nach Fig. 1 bis 3 ist der Steg (5) als flacher, mindestens den halben Durchmesser der offenen Topfseite des Zurrtopfes (2) einnehmender Breitsteg (5) ausgebildet, und dieser Breitsteg (5) weist im Stegzentrum ein unrundes Einsteckloch (13) für das als Bolzen ausgebildete Kupplungsteil (9) der Absperrstange (12) auf.

Der Breitsteg (5) ist mit seinen beiden gerundeten Stegenden im Topf (2) durch Schweißen (S) am Topfmantel (2a) befestigt. Z.B. hat die offene Topfseite des Zurrtopfes (2) einen Durchmesser von ca. 58 mm und dabei der Breitsteg (5) eine Breite von ca. 30 mm.

Das Einsteckloch (13) ist als Langloch, vorzugsweise Ellipsen- oder Ovalloch, ausgebildet und verläuft mit seiner größeren Langlochachse (13a) in Steg-Längsrichtung des in der Aufbautenwand (1) mit seinem Steg (5) vertikal angeordneten Zurrtopf (2). In das Einsteckloch (13) wird ein kegelstumpfförmiger, zum freien Stirnende sich im Durchmesser erweiternder Kupplungsbolzen (9) als Kupplungsteil (9) in Vertikalrichtung beweglich und hinter dem engeren Einsteckbereich verankernd eingesetzt, wie in Fig. 3 gezeigt.

Die größte Weite des Einsteckloches (13) ist zum Einstecken des Kupplungsbolzens (9) etwas größer als der größte Durchmesser des Bolzens (9) und der engere Bereich des Einsteckloches (13) zum Hinterfassen des Kupplungsbolzens (9) kleiner als dessen Durchmesser.

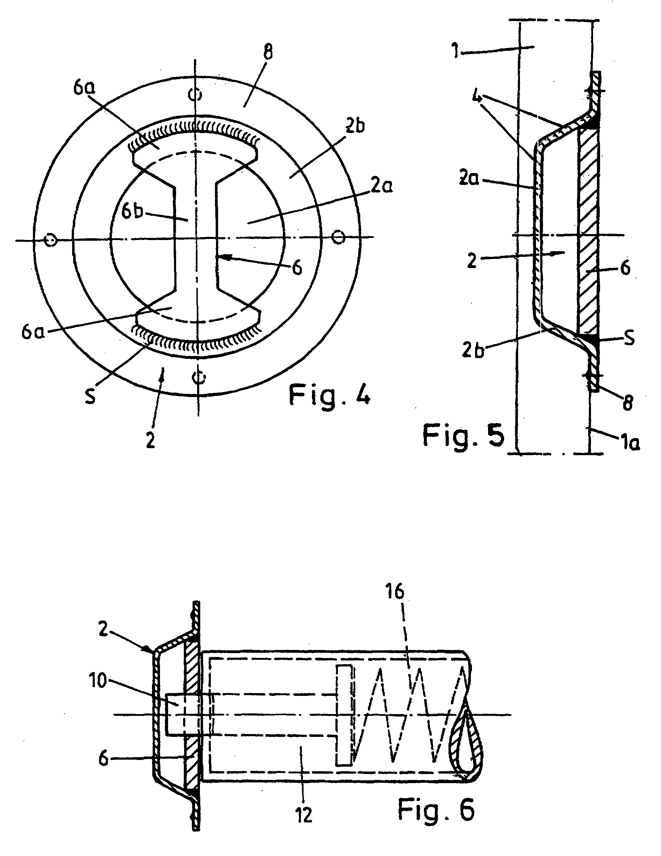

Gemäß der weiteren Ausführung nach Fig. 4 bis 6 ist der Steg (6) von einem flachen Doppel-T-Steg gebildet, der mit seinen beiden T-Schenkeln (6a) im Topfmantel (2a) befestigt ist und liegt mit seinem schmalen T-Steg (6b) in Vertikalrichtung des in die Aufbautenwand (1) eingesetzten Zurrtopfes (2); über diesen Doppel-T-Steg (6) greift eine Kupplungsgabel (10) als Kupplungsteil (10) der eingesetzten Absperrstange (12).

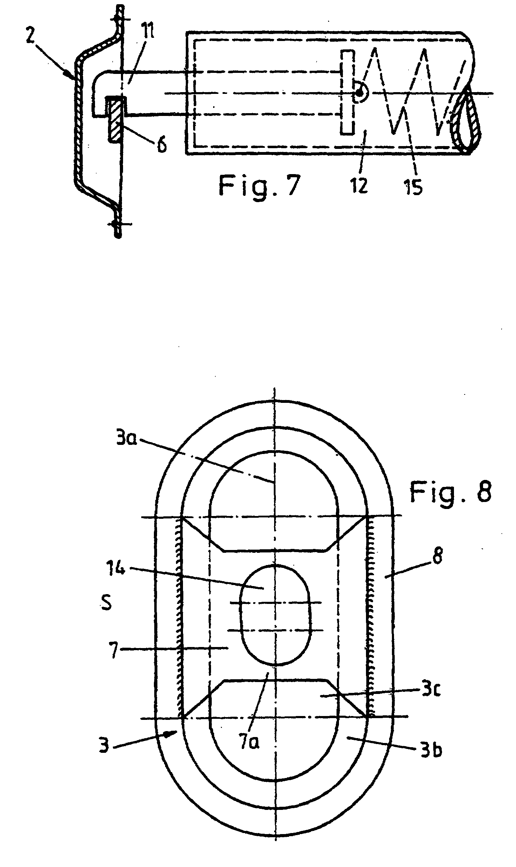

Der Zurrtopf (3) nach Fig. 8 weist eine Langlochform auf und ist mit einem quer zur Langloch-Längsachse (3a) verlaufenden Breitsteg (7) ausgestattet, der mit einem in Längsrichtung (3a) der Langlochform verlaufenden, langlochförmigen Einsteckloch (14) versehen ist. Dieser Breitsteg (7) ist etwa doppel-T-förmig ausgebildet und mit seinen beiden verbreiterten Stegenden (7a) an den Längsseiten des Topfmantels (3b) durch Schweißen (S) befestigt.

Der Topfmantel (3b) läuft kegelförmig nach unten zum Topfboden (3c).

Das Kupplungsteil (11) der Absperrstange (12) läßt sich gemäß Fig. 7 auch von einem den Steg (6) oder den Steg-Einsteckloch-Randbereich (7a) übergreifenden Kupplungshaken (11) bilden.

Das bolzen- oder hakenförmigen Kupplungsteil (9, 11) steht unter Einwirkung einer Zugfeder (15) und das gabelförmige Kupplungsteil (10) unter Einwirkung einer Druckfeder (16) der Absperrstange (12).

Die zugfeder (15) zieht den konischen Kupplungsbolzen (9) gegen den Rand des schmaleren Einstecklochbereiches, so daß die gegenüberliegenden Zurrtöpfe (2) aufeinander zu unter Spannung durch die Absperrstange (12) gehalten werden, wodurch die Aufbautenwände (1) nicht nach außen ausbeulen.

Dasselbe liegt beim Kupplungshaken (11) vor, der über den Steg (6) greifend die beiden Zurrtöpfe (2) ebenfalls unter Spannung zueinander hält.

Die Kupplungsgabel (10) wird durch die Druckfeder (16) gegen den Steg (6) gedrückt, wodurch die Absperrstange (12) zwischen den beiden Zurrtöpfen (2) gehalten wird.

Durch die Langlochform oder die Ovalform des Zurrtopfes (3) läßt sich ein sehr breiter Steg (7) einsetzen und dadurch auch ein größeres Langloch (14) für die Kupplungsteile (9, 10, 11) der Absperrstange (12) vorsehen.

Die zum Topfboden (2a, 3a) zeigenden unteren Randkanten der Stege (5/6/7) der Zurrtöpfe (2,3) sind in bevorzugter Weise zum leichten Ein- und Ausführen der Zurrgurte abgerundet.

## Patentansprüche

1. Zurreinrichtung in Aufbautenwänden von Lastkraftwagen, insbesondere in Plywoodplatten, welche eine Vielzahl an im Abstand nebeneinander in waagerechten Reihen angeordnete Zurrtöpfe aufweist,
dabei jeder Zurrtopf eine kegelstumpfförmige, sich zum Topfboden verjüngende Topfform hat und in entsprechende Aussparungen der Aufbautenwand formschlüssig einsetzbar und
durch Kleber festlegbar ist, sowie einen im Zurrtopf liegenden, mittig verlaufenden Steg und einen an der offenen Topfseite außen umlaufenden, parallel zum Topfboden liegenden Flansch aufweist,
**dadurch gekennzeichnet, daß** der Steg (5/6/7) komplementär au einem endseitigen Kupplungsteil (9/10/11) einer zwischen zwei sich gegenüberliegenden Zurrtöpfen (5/6/7) einsetzbaren Absperrstange (12) ausgebildet ist.

2. Zurreinrichtung nach Anspruch 1, **dadurch gekennzeichnet, daß** der Steg (5) als flacher, mindestens den halben Durchmesser der offenen Topfseite des Zurrtopfes (2) einnehmender Breitsteg (5) ausgebildet ist und im Stegzentrum ein unrundes Einsteckloch (13) für das als Bolzen ausgebildete Kupplungsteil (9) der Absperrstange (12) aufweist.

3. Zurreinrichtung nach Anspruch 1 oder 2, **dadurch gekennzeichnet, daß** das Einsteckloch (13) als Langloch, vorzugsweise Ellipsen- oder Ovalloch ausgebildet ist, mit der größeren Lochachse (13a) in Steg-Längsrichtung des in der Aufbautenwand (1) mit seinem Steg (5) vertikal angeordneten Zurrtopf (2) verläuft und in das Einsteckloch (13) ein kegelstumpfförmiger, zum freien Stirnende sich im Durchmesser erweiternder Kupplungsbolzen (9) in Vertikalrichtung beweglich und hinter dem engeren Einstecklochbereich verankernd einsetzbar ist.

4. Zurreinrichtung nach Anspruch 1, **dadurch gekennzeichnet, daß** der Steg (6) von einem flachen Doppel-T-Steg (6) gebildet ist, der mit seinen beiden T-Schenkeln (6a) im Topfmantel (2b) befestigt ist und mit seinem schmalen T-Steg (6b) in Vertikalrichtung des in die Aufbautenwand (1) eingesetzten Zurrtopf (2) verläuft und über den eine Kupplungsgabel (10) der eingesetzten Absperrstange (12) greift.

5. Zurreinrichtung nach Anspruch 1, **dadurch gekennzeichnet, daß** der Zurrtopf (3) eine Langlochform hat und mit einem quer zur Langloch-Längsachse (3a) verlaufenden Breitsteg (7) mit in Langlochform verlaufenden, langlochförmigen Einsteckloch (14) ausgestattet ist.

6. Zurreinrichtung nach einem der Ansprüche 1 bis 5, **dadurch gekennzeichnet, daß** das Kupplungsteil (11) der Absperrstange (12) von einem den Steg (6) oder den Steg-Einsteckloch-Randbereich (7a) übergreifenden Kupplungshaken (11) gebildet ist.

7. Zurreinrichtung nach einem der Ansprüche 1 bis 6, **dadurch gekennzeichnet, daß** das bolzen- oder hakenförmige Kupplungsteil (9, 11) unter Einwirkung einer Zugfeder (15) und das gabelförmige Kupplungsteil (10) unter Einwirkung einer Druckfeder (16) der Absperrstange (12) steht.

## Claims

1. Lashing device in superstructure walls of trucks, in particular in plywood panels, which have a number of lashing pots arranged at intervals next to one another in horizontal rows,
wherein each lashing pot has a pot shape in the shape of a truncated cone which narrows towards the pot base and can be inserted in a form-fitting manner into corresponding recesses on the superstructure wall, and can be fixed there by means of adhesive, and has a bridge lying in the lashing pot and running centrally, and a flange which runs around the exterior of the open pot side and lies parallel to the pot base,
**characterised in that** the bridge (5, 6, 7) is designed complementary to an end coupling part (9, 10, 11) of a locking rod (12) which can be deployed between two lashing pots (5, 6, 7) lying opposite one another.

2. Lashing device in accordance with claim 1, **characterised in that** the bridge (5) is designed as a flat broad bridge (5) which takes up at least half the diameter of the open pot side of the lashing pot (2), and which in the bridge centre has a non-circular insertion hole (13) for the coupling part (9), designed as a bolt, of the locking rod (12).

3. Lashing device in accordance with claim 1 or 2, **characterised in that** the insertion hole (13) is designed as an elongated hole, preferably an elliptical or oval hole, runs with its larger hole axis (13a) in the bridge's longitudinal direction of the lashing pot (2) arranged with its bridge (5) vertically in the superstructure wall (1), and a truncated cone-shaped coupling bolt (9) - whose diameter widens towards the free front end - is movable in a vertical direction into the insertion hole (13) and can be deployed in an anchoring manner behind the narrower insertion hole area.

4. Lashing device in accordance with claim 1, **characterised in that** the bridge (6) is formed by a flat double-T bridge (6), which is fixed with its two T-legs (6a) in the pot shell (2b), and whose narrow T-bridge (6b) runs in the vertical direction of the lashing pot (2) deployed in the superstructure wall (1), and catches over the one coupling fork (10) of the locking rod (12) used.

5. Lashing device in accordance with claim 1, **characterised in that** the lashing pot (3) has the shape of an elongated hole, and is equipped with a broad bridge (7) which runs cross-wise to the longitudinal axis (3a) of the elongated hole, with an insertion hole (14) in the shape of an elongated hole running in elongated hole form.

6. Lashing device in accordance with one of the claims 1 to 5, **characterised in that** the coupling part (11) of the locking rod (12) is formed by a coupling hook (11) which laps over the bridge (6) or the bridge insertion hole edge area (7a).

7. Lashing device in accordance with one of the claims 1 to 6, **characterised in that** the bolt-shaped or hook-shaped coupling part (9, 11) is subject to the action of a tension spring (15), and the fork-shaped coupling part (10) is subject to the action of a pressure spring (16) of the locking rod (12).

## Revendications

1. Dispositif d'arrimage intégré dans les parois de la carrosserie de poids-lourds, tout particulièrement en panneaux de contreplaqué, lequel dispositif d'arrimage est composé de nombreuses coupelles d'arrimage disposées à distance les unes des autres, en rangées horizontales, chaque coupelle d'arrimage présentant la forme d'un cône tronqué, qui s'amincit vers le fond, et pouvant être insérée, en engagement géométrique, et collée dans une découpe adéquate, pratiquée dans la paroi de la carrosserie, une barrette fait pont au centre de la coupelle et une bride entourant le côté ouvert de la coupelle, parallèlement au fond de celle-ci,
**caractérisé en ce que**
la barrette (5/6/7) est conçue pour coopérer avec une pièce d'accouplement (9/10/11) équipant l'extrémité de la barre de blocage (12) qui peut être insérée entre deux coupelles d'arrimage (5/6/7) disposées vis-à-vis l'une de l'autre.

2. Dispositif d'arrimage selon revendication 1,
**caractérisé en ce que**
la barrette (5) est conçue en forme de pont plat de grande largeur (5), correspondant, au moins, à un demi-diamètre du côté ouvert de la coupelle d'arrimage (2) et présentant, au centre, un orifice de réception (13) en faux-rond destiné à accueillir une pièce d'accouplement (9) conçue en forme de goujon et équipant la barre de blocage (12).

3. Dispositif d'arrimage selon la revendicaton 1 ou 2,
**caractérisé en ce que**
l'orifice de réception (13) est un trou oblong, de préférence oval ou en forme d'ellipse, dont le plus grand des axes (13a) est orienté dans le sens de la longueur de la barrette en pont (5) de la coupelle d'arrimage (2) disposée verticalement dans la paroi (1) de la carrosserie, et une pièce d'accouplement genre goujon (9), en forme de cône tronqué dont le diamètre s'élargit vers l'extrémité frontale libre, pouvant être introduite, mobile verticalement, dans l'orifice de réception (13) et bloquée derrière la partie la plus étroite de l'orifice de réception (13).

4. Dispositif d'amarrage selon revendication 1,
**caractérisé en ce que** la barrette (6) est formé par un profilé en T double, plat (6) qui est fixé, par les deux branches du T (6a), dans le manteau (2b) de la coupelle d'arrimage, et dont l'étroite tige du T (6b) s'étend dans le sens vertical de la coupelle d'arrimage (2) intégrée dans la paroi (1) de la carrosserie et est saisie par la pièce d'accouplement en fourche (10) de la barre de blocage (12).

5. Dispositif d'amarrage selon revendication 1,
**caractérisée en ce que**
la coupelle d'arrimage (3) présente une forme oblongue et est équipée d'une barrette en forme de pont de grande largeur (7) pourvue d'un orifice de réception oblong (14).

6. Dispositif d'arrimage selon l'une des revendications 1 à 5,
**caractérisé en ce que**
la pièce d'accouplement (11) de la barre de blocage (12) est formée par un crochet (11) qui saisit la barrette (6) ou le bord (7a) de l'orifice de réception de celle-ci.

7. Dispositif d'arrimage selon l'une des revendications 1 à 6,
**caractérisé en ce que**
la pièce d'accouplement en forme de goujon ou de crochet (9, 11) est soumise à l'action d'un ressort de traction (15) et la pièce d'accouplement en forme de fourche (10) à celle d'un ressort de pression (16) de la barre de blocage.
